# EUROPEAN PATENT APPLICATION

(11) **EP 1 000 638 A2**
(43) Date of publication of application: **17.05.2000**
(21) Application number: 99203705.1
(22) Date of filing: 08.11.1999
(51) Int. Cl.: A63B 24/00, A63F 13/06, A61B 5/11, G06F 19/00

(54) **Computerized display of motion and signal interface apparatus therefor**

(30) Priority: 09.11.1998 US 188838
(71) Applicant: Morfit Ltd., Jerusalem 91450 (IL)
(72) Inventor: Moore, Jonathan, 76201 Rehovot (IL)
(74) Representative: Colens, Alain

(57) **Abstract**

A motion source-to-computer interface system includes a motion sensor for providing an electrical signal output in response to predetermined motion thereof, apparatus for mechanically fastening the motion sensor to a movable object, and signal interface apparatus associated with the motion sensor and the signal input port for receiving signals from the motion sensor in response to motion of the movable object, and for providing the signals to a signal input port of a computer so as to operate software for driving a visual display unit, and thereby to provide thereon a visual indication of motion of the movable object.

## Description

### FIELD OF THE INVENTION

The present invention relates generally to exercise systems integrated with visual displays, and, more particularly, to such systems having computerized displays.

### BACKGROUND OF THE INVENTION

Exercise systems having computerized visual displays incorporated therewith are known in the art. These systems normally include exercise machines built expressly for this interactive purpose and having a fully integrated, dedicated display. Due to the incorporation of the display into the structure and electrical circuitry of these machines, these machines are usually very expensive, often costing several thousands of dollars. Furthermore, although several attempts have been made to develop interfaces with more functionality, advances in efficiency have been lacking.

An indication of the current state of the art is provided by the following US Patents: US Patent 5,573,013 entitled, "Method Of Monitoring Body Movements Using Activity Monitoring Apparatus," is limited to monitoring very specific body and exercise movements, and is additionally limited in that no provision is made for upgrading the device's interfacing with the computer.

US Patent 5,466,200 entitled: "Interactive Exercise Apparatus," emphasizes a virtual environment generated by the computer software. The device is limited to use in association with an exercise bicycle only and again makes no provision for any other adaptation of the computer interface.

### SUMMARY OF THE INVENTION

The present invention seeks to provide a system for interfacing between a source of motion, such an exercise machine, and a computerized video display which is not integral with the motion source.

The present invention seeks further to provide a video display system for use with an exercise machine, which does not require a display integral therewith and which this facilitates an exercise machine and display which is less complex and thus also less expensive than known in the art.

There is thus provided, in accordance with a preferred embodiment of the invention, a motion source-to-computer interface system for use with a computer having a visual display, a processor, a signal input port associated with the processor, and software associated with the processor for driving the visual display In accordance with signals received via the signal input port, wherein the interface system includes:
(i) a motion sensor for providing an electrical signal output in response to predetermined motion thereof;
(ii) apparatus for mechanically fastening the motion sensor to a movable object; and
(iii) signal interface apparatus associated with the motion sensor and the signal input port for receiving signals from the motion sensor In response to motion of the movable object and for providing the signals to the signal input port so as to operate the software to drive the display and thus provide thereon a visual indication of motion of the movable object.

In accordance with an alternative embodiment of the invention, there is provided a motion source-to-computer display interface system for use with a computer having a visual display, a processor, and a signal input port associated with the processor, wherein the interface system includes:
(i) a motion sensor for providing an electrical signal output in response to predetermined motion thereof;
(ii) apparatus for mechanically fastening the motion sensor to a movable object; and
(iii) signal interface apparatus associated with the motion sensor and the signal input port for receiving signals from the motion sensor in response to motion of the movable object, and for providing the signals to the signal input port; and
(iv) software associated with the processor for driving the visual display in accordance with the signals received via the signal input port so as to provide on the display a visual indication of motion of the movable object.

In accordance with yet a further embodiment of the invention, there is provided a motion display system which includes:
(i) a computer having a visual display, a processor, and a signal input port associated with the processor;
(ii) a motion sensor for providing an electrical signal output in response to predetermined motion thereof;
(iii) apparatus for mechanically fastening the motion sensor to a movable object; and
(iv) signal interface apparatus associated with the motion sensor and the signal input port for receiving signals from the motion sensor in response to motion of the movable object, and for providing the signals to the signal input port; and
(v) software associated with the processor for driving the visual display in accordance with the signals received via the signal input port so as to provide on the display a visual indication of motion of the movable object.

Additionally in accordance with the present invention, the apparatus for mechanically fastening the motion sensor includes apparatus for mechanically connecting the motion sensor thereto so as to provide a motion energy transfer from the object, when in motion, to the motion sensor.

Further in accordance with the present invention, the signal interface apparatus includes an electrical conductor for electrical signal conduction from the motion sensor to the signal input port of the computer.

Additionally in accordance with the present invention, the signal input port is an asynchronous communications port and the motion sensor is operative to provide non-synchronized signals to the wire conductor and the wire conductor is connected to the asynchronous communications port so as to provide the non-synchronized signals directly thereto.

Further in accordance with the present invention, the signal input port is a synchronous communications port, the motion sensor is operative to provide non-synchronized signals to the wire conductor, and the signal interface apparatus also includes an interface device for receiving the non-synchronized signals and for transmitting them in synchronous fashion to the synchronous communications port.

Additionally in accordance with the present invention, the signal interface apparatus includes:
an electrical signal encoder and transmitter for receiving electrical signals from the motion sensor, for encoding the signals, and for transmitting the encoded signals along a wireless path; and
a wireless signals receiver and decoder for receiving the transmitted encoded signals from the encoder and transmitter so as to provide decoded signals to the signal input port of the computer.

Further in accordance with the present invention, the signal input port is an asynchronous communications port and the motion sensor is operative to provide non-synchronized signals to the wire conductor, and the wire conductor is connected to the asynchronous communications port so us to provide the non-synchronized signals directly thereto.

Additionally in accordance with the present invention, the computer includes an audio card having a MIDI port, and the asynchronous communications port is the MIDI port.

Further in accordance with the present invention, the signal input port is a synchronous communications port, the motion sensor is operative to provide non-synchronized signals to the wire conductor, and the signal interface apparatus also includes an interface device for receiving the non-synchronized signals and for transmitting them in synchronous fashion to the synchronous communications port.

Additionally in accordance with the present invention, the signal interface apparatus includes:
an electrical signal encoder and transmitter for receiving electrical signals from the motion sensor, for encoding the signals, and for transmitting the encoded signals along a wireless path; and
a wireless signals receiver and decoder for receiving the transmitted encoded signals from the encoder and transmitter so as to provide decoded signals to the signal input port of the computer.

Further in accordance with the present invention, the signal input port is an asynchronous communications part, and the receiver and decoder is operative to provide the decoded signals directly thereto.

Additionally in accordance with the present invention, the signal input port is a synchronous communications port, and the receiver and decoder is operative to provide the decoded signals directly thereto.

### BRIEF DESCRIPTION OF THE DRAWINGS

The present invention will be more easily understood and appreciated from the following detailed description, taken in conjunction with the drawings, in which:
Fig. 1 is a block diagram depicting a computerized motion display system constructed and operative in accordance with the present invention;
Fig. 2A is a pictorial representation of a motion sensor attached to the arm of a person exercising.
Fig. 2B is a pictorial representation of a motion sensor attached to a representative exercise device;
Fig. 3 is a partially cut-away view of a motion sensor constructed in accordance with a preferred embodiment of the present invention;
Fig. 4A is a more detailed block diagram representation of the system of Fig. 1, wherein the interface apparatus thereof is electrical wire interface apparatus, in accordance with a preferred embodiment of the invention; and
Fig. 4B is a more detailed block diagram representation of the system of Fig. 1, wherein the interface apparatus thereof is wireless, in accordance with an alternative embodiment of the invention.

### DETAILED DESCRIPTION OF THE PREFERRED EMBODIMENT

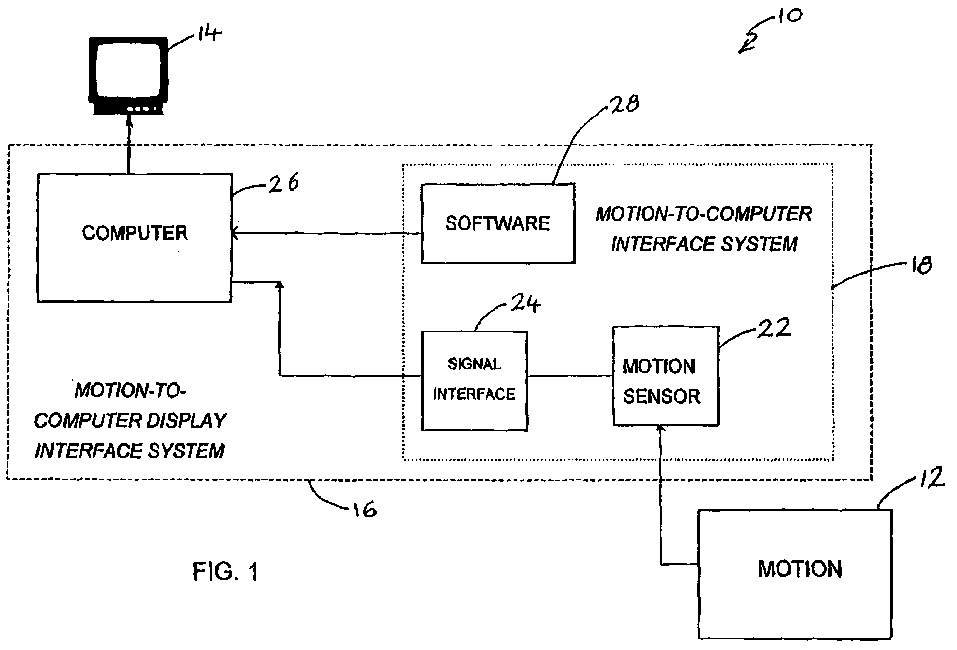

Referring now to Fig. 1, there is seen a computerized motion display system, referenced generally 10, constructed and operative in accordance with the present invention. The system 10 of the invention facilitates interfacing between a source of motion 12 and a visual display unit (VDU) 14, via a motion-to-computer-display interface system (MCDI) 16. MCDI 16 includes a motion-to-computer interface system (MCI) 18, which has a motion sensor 22 mechanically fastened to the motion source 12, a signal interface 24 for receiving electrical signals from motion sensor 22 and for providing corresponding signals to a computer 26. Suitable software, referenced 28, installed in computer 26, drives the VDU 14, which may be any suitable screen display, such as used with personal computers, so as to facilitate a visual display of movement of the source of motion 12 on VDU 14.

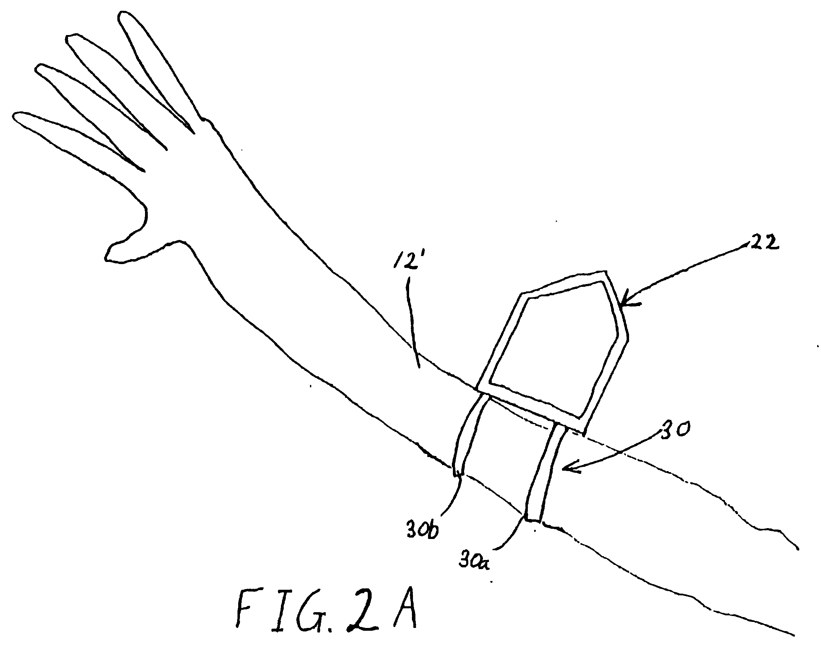

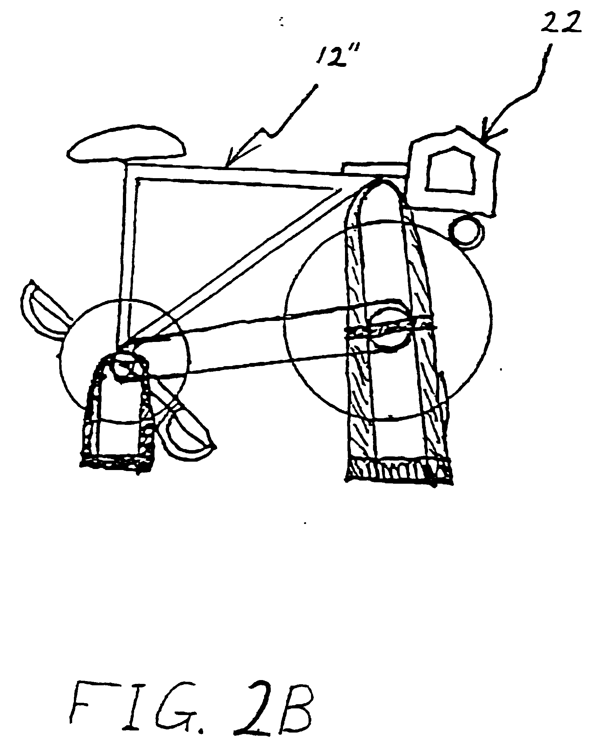

It will be appreciated that, as motion sensor 22 is mechanically fastened to the source of motion 12, as described below in conjunction with Figs. 2A and 2B, the system of the invention may be used to display motion of a person running or otherwise exercising, motion of an animal, or motion of a selected portion of an exercise device, such as an exercise bicycle, rowing machine, or stepper, for example, or of any moving object.

Referring now to Fig. 2A, motion sensor 22 is seen to be fastened via mechanical fastening apparatus 30 to an arm 12' of a person exercising (not shown). In Fig. 2B, motion sensor 22 is seen to be mechanically fastened to an exemplary exercise device 12'', illustrated here as an exercise bicycle. It will be appreciated that, as there need be no electrical energy transfer between the exercise device 12'' and the system of the invention, device 12'' may be a completely mechanical device, and sensor 22 may be attached to any desired moving portion thereof.

As seen particularly in Fig. 2A, mechanical fastening apparatus 30 may be, by way of example, straps, referenced 30a and 30b. These straps can be closed in any suitable manner, including by use of snaps, hook and pile surfaces or other methods for achieving secure physical connection between the source of movement 12 and motion sensor 22.

Referring now to Fig. 2B, motion sensor 22 is seen to be secured mechanically to exercise device 12'' by means of screws, bolts, straps or any other suitable means (not shown) for achieving secure physical connection between the source of motion 12 and motion sensor 22.

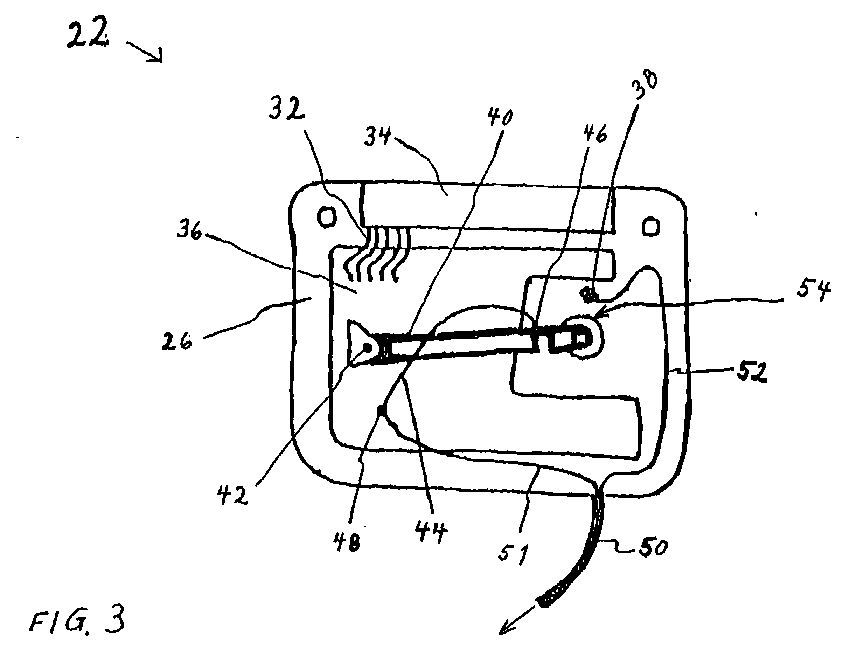

Referring now to Fig. 3, motion sensor 22 is shown in detail. Once again it should be emphasized that this is one embodiment of a sensor, or motion sensor that can be used with the present invention. Visible in this partially cut-away view are wires 32 connecting an LED-type display panel 34 to a circuit board 36 of the sensor 22. The illustrated embodiment of motion sensor 22 includes a normally dosed circuit having a fixed electrical contact 38 and a movable contact 40 which is arranged for pivoting about a pivot location 42.

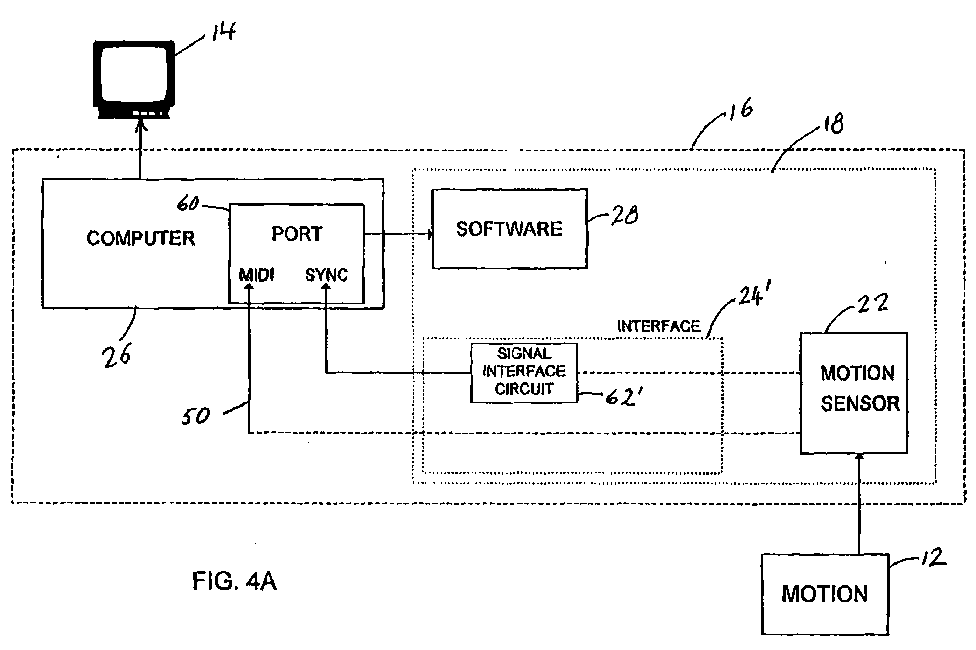

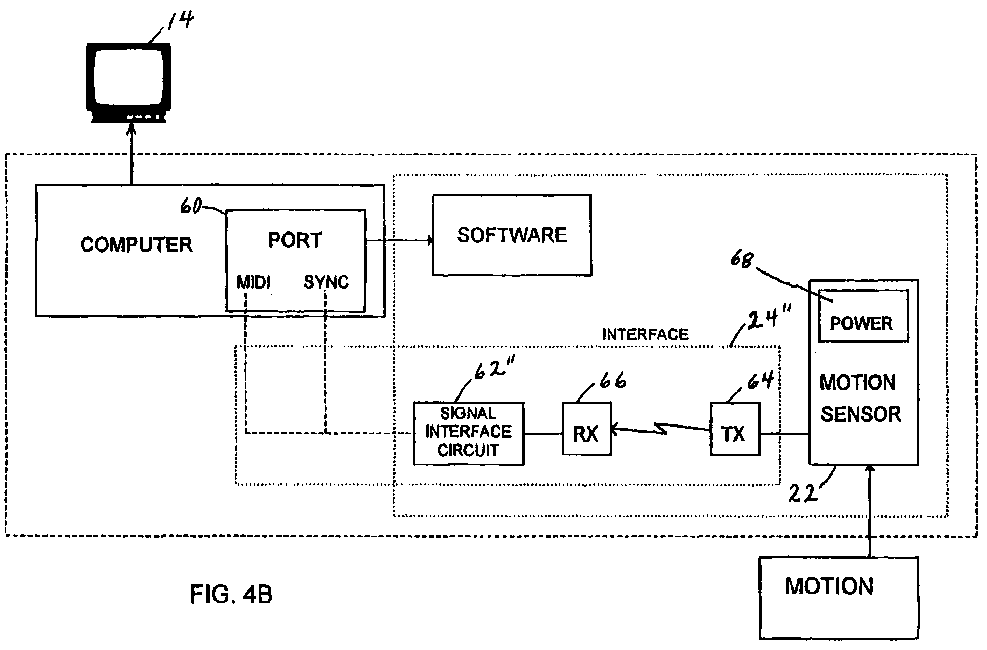

A spring 44, such as a leaf spring, has one end 46 soldered or attached by other suitable electro-conductive means to movable contact 40. The other end 48 of spring 44 is attached to circuit board 36. An electrical cord 50 has first and second wires, respectively referenced 51 and 52. First wire 51 is electrically connected to spring 44 and thus also to movable contact 40, and second wire 52 is connected to fixed contact 38. Both wires 51 and 52 form part of signal interface 24 (Fig. 1), as described below in greater detail, in conjunction with Figs. 4A and 4B.

In the present embodiment, when motion sensor 22 is at rest, spring 44 is operative to urge movable contact 40 into contact with fixed contact 38, in the absence of opposing forces of at least a predetermined magnitude, thereby keeping the electrical circuit dosed, and thus providing an electrical output to computer 26 (Fig. 1), in a manner described in greater detail below in conjunction with Figs. 4A and 4B. In response to a predetermined motion by a user, such as a person exercising or an exercise device, as described above in conjunction with Figs. 1, 2A and 2B, movable contact 40 is operative to pivot about pivot location 42, out of contact with fixed contact 38, thereby to break the circuit 54. Preferably, when the circuit is broken for greater than a predetermined time period, in the order of, for example, one-tenth of a second, this is registered as a movement by the system and is processed as such by computer 26 and software 28 for display on VDU 14.

It will thus be appreciated that the term "predetermined motion" is defined by a force of at least predetermined magnitude applied to motion sensor 22 applied thereto by a user, and for at least a predetermined time period, as described above.

Accordingly, when a predetermined motion, as defined, is applied to sensor 22, so as to cause movable contact 40 to pivot into and out of contact with fixed contact 38, there is provided a corresponding stream of electrical signals, corresponding to the periodic closing of the electrical circuit of which sensor 22 forms a part. Accordingly, when sensor 22 is mechanically attached to a person exercising, or to a moving portion of an exercise machine, for example, the stream of signals corresponds to the motion thereof.

Referring now to Figs. 4A and 4B, there are seen, in more detail, various embodiments of the signal Interface, which is denoted by 24' in Fig. 4A and by 24'' in Fig. 4B. 24, in accordance with different embodiments of the invention. In both embodiments, it is seen that signal interface 24 provides signals to a signal input port 60. In accordance with a preferred embodiment of the invention, port 60 is an asynchronous communications port, typically the "MIDI" or "game" port, such as found on audio cards in personal computers having multimedia systems, and as depicted in the drawings by the legend "MIDI." An advantage of use of this type of port is that, as the electrical signals emitted by motion sensor 22 are inherently non-synchronized, these signals can be provided directly to the signal port in a very "raw" form, without being converted into a digital, synchronous signal stream.

Alternatively, port 60 is a synchronous communications port, such as a serial port, parallel port, or USB port, all of which are well known in the art. This is indicated by the legend "SYNC" in the drawings. In order to facilitate use of motion sensor 22 of the invention with this type of port, requiring conversion of the asynchronous signal stream provided by motion sensor 22 to a synchronous stream, a suitable signal interface circuit 62' (Fig. 4A) or 62'' (Fig. 4B), is required.

Referring now particularly to Fig. 4A, in the illustrated embodiment, the interface 24 connecting motion sensor 22 to port 60 is electrical cord 50, which connects either directly to the MIDI port, as shown, or, also as shown, via signal interface circuit 62', to the SYNC port, as described above.

The signals received via port 60 are then processed by a suitable software package, seen schematically at 28, for driving the video display on VDU 14, providing thereon a visual indication of motion at motion source 12, in real time. Preferably, the software used in the present invention is that available from Morfit Ltd., Jerusalem, Israel, at http://www.morfit.com/products1.html.

Referring now to Fig. 48, the signal interface 24 is seen to be a wireless interface which includes an encoder and transmitter 64, connected to motion sensor 22 for receiving electrical signals therefrom, a receiver and decoder 66, for receiving wireless signals from encoder and transmitter 64, and a suitable signal interface circuit 62'', which is configured for providing output signals, corresponding to the received signals, to the MIDI port or to the SYNC port, as required. A power source, referenced 68, is also provided in conjunction with motion sensor 22, thereby to power the electrical circuit therein. Power source may be any suitable chargeable or non-chargeable portable power source, for example.

The wireless signal medium is preferably RF, but may alternatively be IR, or any alternative electromagnetic radiation.

It will be appreciated by persons skilled in the art, that use of an interface which requires nothing more than a mechanical attachment of the motion sensor 22 to a source of motion 12, and the connection of the system of the invention to a standard personal computer, provides a very simple, and inexpensive system which can be used not only to effectively upgrade exercise devices without any sort of video display, but also to provide a real time display of many different physical activities of a subject.

It will also be appreciated by persons skilled in the art, that the scope of the present invention is not limited by what has been particularly shown and described above. Rather, the scope of the invention is limited solely by the claims, which follow.

## Claims

1. A motion source-to-computer interface system for use with a computer having a visual display, a processor, a signal input port associated with the processor, and software associated with the processor for driving the visual display in accordance with signals received via the signal input port, wherein said interface system includes:
(i) a motion sensor for providing an electrical signal output in response to predetermined motion thereof;
(ii) apparatus for mechanically fastening said motion sensor to a movable object; and
(iii) signal interface apparatus associated with said motion sensor and the signal input port for receiving signals from said motion sensor in response to motion of the movable object, and for providing the signals to the signal input port so as to operate the software to drive the display and thus provide thereon a visual indication of motion of the movable object.

2. A motion source-to-computer display interface system for use with a computer having a visual display, a processor, and a signal input port associated with the processor, wherein said interface system includes:
(i) a motion sensor for providing an electrical signal output in response to predetermined motion thereof;
(ii) apparatus for mechanically fastening said motion sensor to a movable object; and
(iii) signal interface apparatus associated with said motion sensor and the signal input port for receiving signals from said motion sensor in response to motion of the movable object, and for providing the signals to the signal input port; and
(iv) software associated with the processor for driving the visual display in accordance with the signals received via the signal input port so as to provide on the display a visual indication of motion of the movable object.

3. A motion display system which includes:
(i) a computer having a visual display, a processor, and a signal input port associated with the processor;
(ii) a motion sensor for providing an electrical signal output in response to predetermined motion thereof;
(iii) apparatus for mechanically fastening said motion sensor to a movable object; and
(iv) signal interface apparatus associated with said motion sensor and the signal input port for receiving signals from said motion sensor in response to motion of the movable object, and for providing the signals to the signal input port; and
(v) software associated with the processor for driving the visual display in accordance with the signals received via the signal input port so as to provide on the display a visual indication of motion of the movable object.

4. A system according to any of claims 1 - 3, wherein said apparatus for mechanically fastening said motion sensor includes apparatus for mechanically connecting said motion sensor thereto so as to provide a motion energy transfer from the object, when in motion, to said motion sensor.

5. A system according to any of claims 1 - 3, wherein said signal interface apparatus includes an electrical conductor for electrical signal conduction from said motion sensor to the signal input port of the computer.

6. A system according to claim 5, wherein the signal input port is an asynchronous communications port and said motion sensor is operative to provide non-synchronized signals to said wire conductor and said wire conductor is connected to the asynchronous communications port so as to provide the non-synchronized signals directly thereto.

7. A system according to claim 5, wherein the signal input port is a synchronous communications port, said motion sensor is operative to provide non-synchronized signals to said wire conductor, and said signal interface apparatus also includes an interface device for receiving the non-synchronized signals and for transmitting them in synchronous fashion to the synchronous communications port.

8. A system according to any of the preceding claims, wherein said signal interface apparatus includes:
an electrical signal encoder and transmitter for receiving electrical signals from said motion sensor, for encoding the signals, and for transmitting the encoded signals along a wireless path; and
a wireless signals receiver and decoder for receiving the transmitted encoded signals from said encoder and transmitter so as to provide decoded signals to the signal input port of the computer.

9. A system according to claim 3, wherein said signal input port is an asynchronous communications port and said motion sensor is operative to provide non-synchronized signals to said wire conductor, and said wire conductor is connected to said asynchronous communications port so as to provide the non-synchronized signals directly thereto.

10. A system according to claim 9, wherein said computer includes an audio card having a MIDI port, and said asynchronous communications port is said MIDI port.

11. A system according to claim 3, wherein the signal input port is a synchronous communications port, said motion sensor is operative to provide non-synchronized signals to said wire conductor, and said signal interface apparatus also includes an interface device for receiving the non-synchronized signals and for transmitting them in synchronous fashion to said synchronous communications port.

12. A system according to claim 3, wherein said signal interface apparatus includes:
an electrical signal encoder and transmitter for receiving electrical signals from said motion sensor, for encoding the signals, and for transmitting the encoded signals along a wireless path; and
a wireless signals receiver and decoder for receiving the transmitted encoded signals from said encoder and transmitter so as to provide decoded signals to the signal input port of said computer.

13. A system according to claim 12, wherein said signal input port is an asynchronous communications port, and said receiver and decoder is operative to provide the decoded signals directly thereto.

14. A system according to claim 12, wherein said signal input port is a synchronous communications port, and said receiver and decoder is operative to provide the decoded signals directly thereto.
